# FASCICULE DE BREVET EUROPEEN

(11) **EP 1 616 734 B1**
(45) Date de publication et mention de la délivrance du brevet: **19.12.2007**
(21) Numéro de dépôt: 05106202.4
(22) Date de dépôt: 07.07.2005
(51) Int. Cl.: B60H 1/00

(54) **Système de contrôle de la température de ventilation d'un appareil de chauffage et de climatisation pour véhicules automobiles**
Kontrollsystem für die Beluftungstemperatur einer Heizungs- und Klimaanlage für Kraftfahrzeuge
Control system of the ventilation temperature of a heating and air conditioning device for automotive vehicles

(30) Priorité: 16.07.2004 FR 0407841
(43) Date de publication de la demande: 18.01.2006
(73) Titulaire: Valeo Systèmes Thermiques, 78321 Le Mesnil St Denis Cedex (FR)
(72) Inventeur: Vincent, Philippe VALEO SYSTEMES THERMIQUES, 28230, Epernon (FR); Sikorski, Richard VALEO CLIMATE CONTROL, 48044 MICHIGAN, MACOMB (US); Girardin, Agnès, 48360 MICHIGAN, Lake Orion (US); Spryshak, Joseph M. VALEO CLIMATE CONTROL, 48353 MICHIGAN, HARTLAND (US)

(56) Documents cités:
- DE-A1- 10 109 240
- US-A1- 2002 157 811
- US-A1- 2003 056 527

## Description

La présente invention concerne un système de contrôle de température en sortie d'au moins une bouche de distribution d'une chambre de transit d'un appareil de ventilation, chauffage et éventuellement climatisation.

L'invention trouve une application particulièrement avantageuse dans le domaine des appareils de ventilation, chauffage et de climatisation des véhicules automobiles, qu'il s'agisse d'appareils mono-zone ou multi-zone, implantés à l'intérieur (par exemple à l'avant ou à l'arrière du véhicule), à l'extérieur (par exemple en baie de pare-brise ou sous plancher) de l'habitacle d'un véhicule.

Dans la suite de ce mémoire, on entendra par bouches de distribution aussi bien les bouches de dégivrage du pare-brise et des fenêtres latérales que les bouches de pieds ou encore les bouches de ventilation frontales ou supérieures du tableau de bord, éventuellement bouches d'alimentation en air des zones arrière.

D'une manière générale, les véhicules automobiles sont équipés d'appareils de chauffage et de climatisation comprenant une chambre de transit, le plus souvent une chambre de mixage destinée à mélanger de l'air chaud provenant du radiateur du véhicule à de l'air froid provenant d'une alimentation en air froid, soit en provenance direct de l'extérieur du véhicule ou après passage au travers d'un évaporateur. Un volet de mixage permet de faire varier la température du mélange en laissant pénétrer plus ou moins d'air froid dans la chambre de mixage. Ainsi, l'utilisateur a la possibilité de contrôler la température de l'air sortant de la chambre de mixage par exemple par une bouche de ventilation, elle-même munie d'un volet d'admission d'air.

On peut toutefois observer qu'avec ce type d'appareils (par exemple la demande de brevet US-A-2002/0157811) il n'est pas possible de régler la température de l'air sortant de la bouche de ventilation indépendamment de celle obtenue dans la chambre de mixage.

C'est pourquoi dans certains véhicules, principalement haut de gamme, il est prévu des dispositifs spécifiquement destinés à assurer cette fonctionnalité.

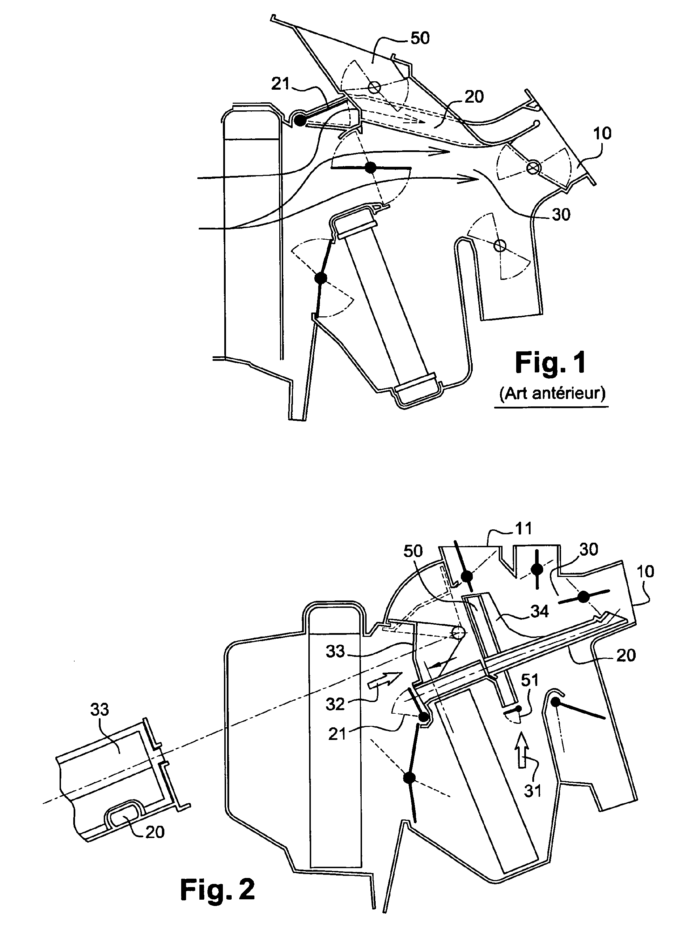

Dans l'exemple de la figure 1 qui montre une vue de côté d'un appareil de chauffage et de climatisation muni d'un système de contrôle de la température connu, un réglage indépendant de la température au niveau de la sortie de la bouche 10 de ventilation est obtenue par l'adjonction d'un conduit 20 canalisant de l'air froid parallèlement à l'air produit par la chambre 30 de mixage. Un volet 21 de réglage permet de faire varier la quantité d'air froid supplémentaire admis au voisinage de la bouche 10 d'aération et donc de moduler en quelque sorte la température de l'air fourni par la chambre 30 de mixage.

Ce système de contrôle de température connu présente cependant un certain nombre d'inconvénients.

Du fait de la localisation des bouches de ventilation dans les appareils, il est presque toujours nécessaire de croiser le conduit indépendant d'air froid avec une ou plusieurs bouches de distribution (telle que la bouche 11 de dégivrage sur la figure 1) avant d'atteindre la sortie de la bouche 10 de ventilation à laquelle l'air froid canalisé est destiné. Ce croisement est une interférence physique qui oblige soit à réduire la section du conduit indépendant d'air froid, soit à réduire la section de la bouche de distribution concernée pour une section totale donnée. Ceci provoque une restriction critique par exemple de la bouche de distribution avec pour conséquence l'impossibilité d'obtenir les débits d'air nécessaire au confort de l'utilisateur.

D'autre part, le positionnement du conduit indépendant d'air froid sur l'une des faces des boîtiers des appareils entraîne une localisation de l'orifice d'entrée de l'air froid défavorable par rapport au circuit d'air principal. En effet, afin de bénéficier d'une quantité d'air froid suffisante, le volume d'entrée ainsi que la section interne du conduit doivent être prévus en conséquence. Il en résulte que le volume global à réserver pour réaliser la fonction recherchée est important et nuisible au bon dimensionnement des autres éléments et sections de l'appareil.

De même, la localisation du conduit d'air froid dans le boîtier d'un appareil résulte de la position des autres bouches et du principe de moulage retenu pour les boîtiers, avec pour conséquence que le positionnement du conduit n'est pas toujours idéal pour remplir parfaitement la fonction. Ce conduit est alors moulé en même temps que le boîtier de l'installation avec pour conséquence d'être nécessairement placé contre une paroi latérale du boîtier. Par ailleurs, même si le conduit est correctement dimensionné pour créer l'écart de température souhaité, l'air froid doit être injecté dans la bouche de ventilation de façon à garantir une parfaite homogénéité en sortie de bouche, ce qui n'est manifestement pas le cas quand le conduit est moulé sur la paroi du boîtier. L'utilisateur final ressentira dans son aérateur des gradients de température nuisibles au confort, en particulier plus froid dans la zone qui bordent le bouche de distribution sensiblement au droit du conduit et plus chaud dans la zone centrale de celle-ci.

Enfin, la conception des solutions actuelles oblige dans certains cas à utiliser de nombreuses pièces pour réaliser la fonction de contrôle indépendant de température, dont plusieurs volets de réglage d'air froid. Cette disposition est pénalisante pour le coût de réalisation de la fonction du fait du prix des composants et d'un temps d'assemblage plus long.

Aussi, le problème technique à résoudre par l'objet de la présente invention est de proposer un système de contrôle de température en sortie d'au moins une bouche de distribution d'une chambre de transit d'un appareil de chauffage et de climatisation, système qui permettrait d'éviter les interférences de conception au niveau des bouches de distribution, tout en présentant un positionnement optimal du conduit ainsi qu'une bonne homogénéité de température en sortie de la bouche de distribution et un coût de réalisation réduit.

La solution au problème technique posé consiste, selon la présente invention, en ce que ledit système comprend une pluralité de conduits d'air traversant la chambre de transit jusque dans la bouche de distribution.

Ainsi, on comprend qu'avec le système conforme à l'invention il n'y a pas de croisement de canaux de flux d'air à l'immédiat des autres bouches de distribution. Les sections de sortie de ces bouches n'étant pas affectées, il en résulte une grande latitude de positionnement et une facilité de conception et d'intégration de l'appareil dans le cockpit du véhicule.

On entend par « traversant la chambre de transit », des conduits indépendants des parois du boîtier avantageusement organisés sous la forme d'un module distinct que l'on vient intégrer dans la chambre transit.

Dans le cas d'une chambre de mixage, celle-ci peut être largement dimensionnée pour permettre un mélange d'air suffisant et garantir une faible perte de charge dans les différents circuits d'air.

Les contraintes de positionnement sur les conduits d'air vers les bouches de distribution associées sont donc réduites.

Selon un mode de réalisation particulier de l'invention, lesdits conduits d'air sont au moins en partie des conduits d'air froid et/ou d'air chaud.

Dans ce cas, il y a avantage, selon l'invention, à ce que l'entrée du conduit d'air froid ou du conduit d'air chaud est placée directement en regard d'un flux d'alimentation en air froid ou en air chaud de la chambre de mixage. On obtient de cette manière une alimentation optimale des conduits en air.

On observera par ailleurs que la localisation de la sortie des conduits d'air froid dans la bouche de distribution est bien adaptée pour assurer une homogénéité satisfaisante de la température de l'air à la sortie de la bouche de distribution. En effet, chacun des conduits constituant le système peuvent déboucher tout le long de la bouche de distribution contrairement à l'art antérieur ou le conduit débouche seulement au voisinage de la paroi du boîtier.

Enfin, l'invention prévoit également que les conduits d'air froid et ou les conduits d'air chaud sont intégrés dans un ensemble de gestion aérothermique dudit appareil. Cette intégration peut être réalisée par moulage avec ledit ensemble de gestion aérothermique

Sur le plan économique, cette solution d'intégration présente l'avantage de ne pas générer de coût supplémentaire tout en mettant à profit les désavantages techniques de l'ensemble de gestion aérothermique.

Plus particulièrement et concernant les pertes de charge, cette configuration est idéale car les conduits d'air froid se superposent aux formes de blocage d'air chaud déjà ménagées dans l'ensemble de gestion aérothermique pour protéger le passage d'air froid. Cette configuration est bien entendu envisageable pour un ensemble de gestion aérothermique qui comprend à la fois les conduits d'air froid et les conduits d'air chaud.

Dans un mode de réalisation particulier, ledit ensemble de gestion aérothermique est un mélangeur de flux croisés (« cross flow baffle »). Il est alors possible d'envisager que les canaux de flux d'air froid dudit mélangeur sont plus courts que les conduits d'air froid. Cette particularité est particulièrement avantageuse en ce que les dimensions du mélangeurs de flux croisés sont adaptées à la chambre de mixage alors que l'apport d'air chaud ou froid emmené par les conduits est délivré plus en aval dans le conduit ou la bouche de distribution.

On notera que l'invention concerne également le cas où lesdits conduits d'air sont au moins en partie des conduits d'air chaud, ceci en combinaison ou non avec des conduits d'air froid ou avec l'ensemble de gestion aérothermique.

La mise en oeuvre et les avantages de conduits d'air chaud sont identiques à ceux résultant de l'implantation de conduits d'air froid.

La description qui va suivre en regard des dessins annexés, donnés à titre d'exemples non limitatifs, fera bien comprendre en quoi consiste l'invention et comment elle peut être réalisée.
La figure 1 est une représentation d'un appareil de ventilation, chauffage, éventuellement climatisation connu.
La figure 2 est une vue de côté d'un appareil de ventilation, chauffage, éventuellement climatisation muni d'un système de contrôle de la température conforme à l'invention.
La figure 3a est une vue en perspective d'un ensemble mélangeur de flux croisés muni de conduits d'air froid selon l'invention.
La figure 3b est une vue en perspective d'un ensemble mélangeur de flux croisés muni de conduits d'air froid et de conduits d'air chaud selon l'invention.
La figure 3c est une vue en perspective de l'ensemble mélangeur de la figure 3b montrant des canaux d'air froid plus courts que les conduits d'air froid.
La figure 4 est un graphe de températures en fonction du déplacement du volet de mixage pour le système de contrôle de la figure 2.
La figure 5 est une vue de côté d'une première variante de l'appareil de chauffage et de climatisation de la figure 2.
La figure 6a est un graphe de températures en fonction du déplacement du volet de mixage pour le système de contrôle de la figure 5 dans le cas d'une obturation complète des conduits d'air froid par le volet de mixage.
La figure 6b est un graphe de températures en fonction du déplacement du volet de mixage pour le système de contrôle de la figure 5 dans le cas d'une obturation partielle des conduits d'air froid par le volet de mixage.
La figure 7a est une vue de côté d'une deuxième variante de l'appareil de chauffage et de climatisation de la figure 2.
La figure 7b est une vue de l'appareil de la figure 7a selon la flèche F1.
La figure 8a est une vue de côté d'une troisième variante de l'appareil de chauffage et de climatisation de la figure 2.
La figure 8b est une vue de l'appareil de la figure 8a selon l'axe A-A.
La figure 9a est une vue de côté d'une quatrième variante de l'appareil de chauffage et de climatisation de la figure 2.
La figure 9b est une vue de l'appareil de la figure 9a selon l'axe A-A.

Sur la figure 2 est représenté un appareil de ventilation, chauffage, éventuellement climatisation, notamment pour véhicules automobiles, équipé d'un système de contrôle de la température en sortie d'une bouche 10 de distribution, ici une bouche de ventilation, d'une chambre 30 de transit qui, dans l'exemple de réalisation de la figure 2, est une chambre de mixage destinée à mélanger de l'air chaud 31 provenant du radiateur du véhicule à de l'air froid 32 provenant d'une arrivée d'air froid.

La température de l'air sortant de la chambre 30 de mixage et distribué par la bouche 10 de ventilation peut être contrôlée en réglant la quantité d'air froid 32 entrant dans la chambre au moyen d'un volet 33 de mixage.

L'installation n'est pas limitée à l'utilisation d'un évaporateur 60 tel que représenté sur la figure 2. En effet, l'effet technique recherché par l'invention n'est pas lié ou fait que l'air soit refroidit. Le système selon l'invention peut aussi fonctionné avec l'air froid provenant directement de l'extérieur du véhicule.

Comme le montre la figure 2, ledit système de contrôle de la température comprend des conduits 20 d'air froid parallèles traversant la chambre 30 de mixage jusque dans la bouche 10 de ventilation.

L'appareil est muni d'un volet 21 de réglage d'admission de l'air froid à l'intérieur des conduits 20. Ainsi, la quantité d'air froid se mélangeant au flux d'air issu de la chambre 30 de mixage peut être modulée en fonction de l'ouverture du volet 21 de réglage, ce qui permet de contrôler la température de l'air sortant de la bouche 10 de ventilation.

Le fait que la sortie des conduits 20 d'air froid est placée à l'intérieur même et sur toute la largeur de la bouche 10 de ventilation conduit à une excellente homogénéité de température de l'air dans le véhicule et à un meilleur confort pour l'utilisateur.

La figure 2 montre également que l'entrée des conduits 20 d'air froid est placée directement en regard du flux 32 d'alimentation en air froid de la chambre 30 de mixage, ce qui rend extrêmement simple l'alimentation en air froid des conduits 20.

Enfin, on peut noter sur la figure 2 la présence de conduits 50 d'air chaud dont l'admission en air chaud est commandée par un volet 51. Ces conduits 50 sont prévus dans l'exemple de la figure 2 pour contrôler la température de sortie d'une bouche 11 de dégivrage.

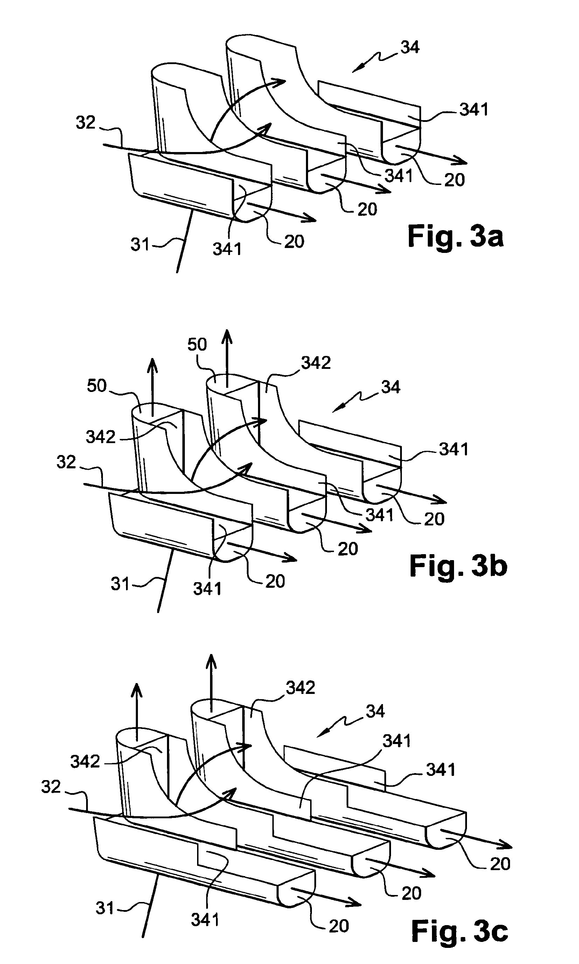

Sur les figures 2, 3a, 3b et 3c apparaît une forme particulière de l'invention dans laquelle une pluralité de conduits 20 d'air froid ainsi qu'éventuellement une pluralité de conduits 50 d'air chaud sont intégrés, par moulage par exemple, dans un ensemble de gestion aérothermique de l'appareil constitué par un mélangeur 34 de flux croisés (« cross flow baffles »). Il s'agit là d'une pièce indépendante de l'appareil qui peut être intégré dans la chambre de mixage à la manière d'un rack par exemple.

Sur la figure 3a, seuls des conduits 20 d'air froid ont été intégrés dans le mélangeur 34. La figure 3b montre une intégration simultanée de conduits 20 d'air froid et de conduits 50 d'air chaud au mélangeur 34. Enfin, on peut voir sur la figure 3c un mode de réalisation dans lequel les canaux 341 de flux d'air froid dudit mélangeur 34 sont plus courts que les conduits 20 d'air froid. Bien entendu, il pourrait en être de même pour les canaux 342 d'air chaud relativement aux conduits 50 d'air chaud.

Ces figures montrent en outre que les flux principaux d'alimentation en air froid de la chambre 30 de mixage et les conduits 20 d'air froid sont superposés.

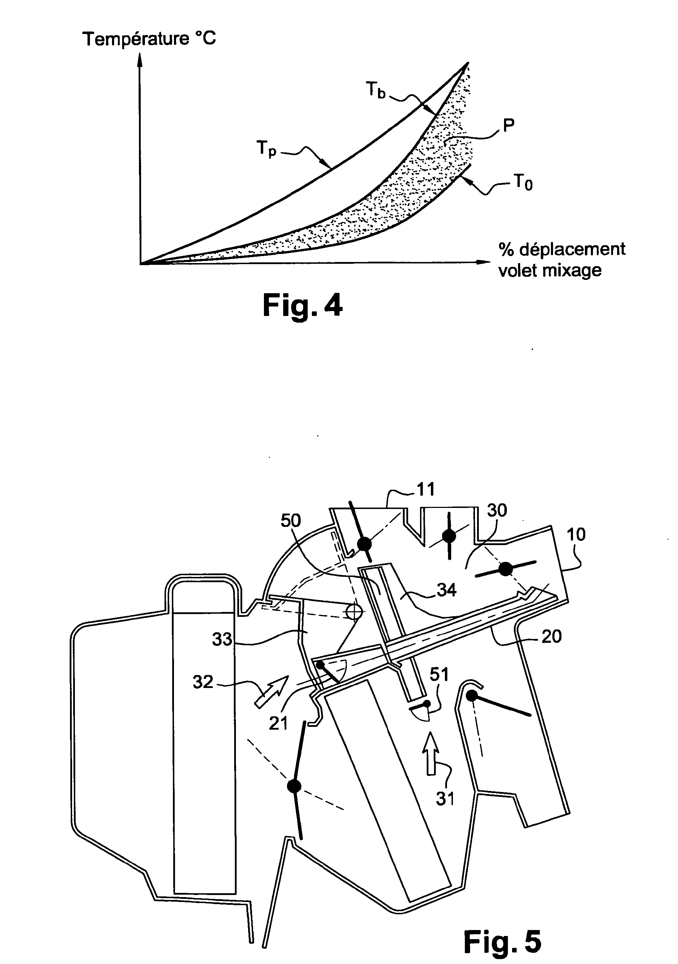

Dans le mode de réalisation de la figure 2, le volet 33 de mixage est extérieur aux conduits 20 d'air froid, de sorte que la manoeuvre du volet de mixage est sans effet sur la quantité admise dans les conduits. Cette configuration se traduit par le graphe de la figure 4 montrant les variations de différentes températures en fonction de l'ouverture du volet 33 de mixage. L'exemple pris ici est celui d'un réglage à deux niveaux (« bilevel »), à savoir le réglage de la température (T° pieds) au niveau des pieds de l'utilisateur et le réglage de la température (T° aération) d'aération qui est celle fournie par le système de la figure 2 en sortie de la bouche 10 de ventilation.

Comme on peut le voir sur la figure 4, la température d'aération peut être réglée sur une plage P de réglage complète entre les températures To et Tf correspondant respectivement aux positions ouverte et fermée du volet 21 de réglage, quelle que soit la position du volet 33 de mixage. A titre de référence, on a indiqué la température Tp au niveau des pieds des passagers avant du véhicule.

A l'inverse, la figure 5 montre une variante dans laquelle le volet 33 de mixage, placé en amont du volet 21 de réglage, est apte à obturer complètement ou partiellement les conduits 20.

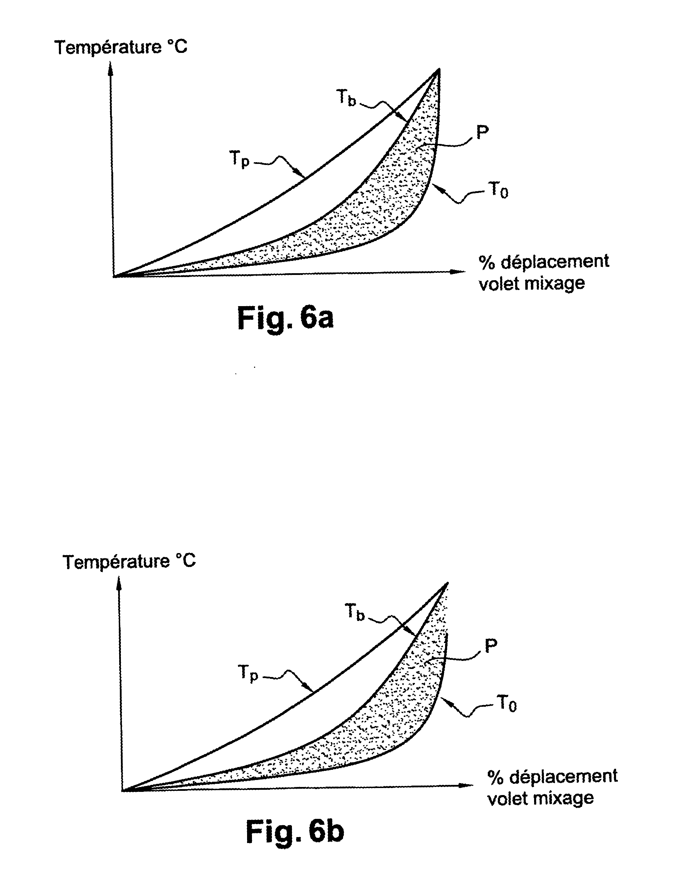

Dans le cas où le volet 33 de mixage est susceptible d'obturer totalement les conduits 20, les variations de la température d'aération sont celles indiquées sur la figure 6a où la plage P de réglage se réduit avec le degré d'obturation du volet 33 de mixage pour devenir nulle lorsque l'obturation est complète puisqu'à ce moment le volet 21 de réglage est sans effet, aucun flux d'ait froid traversant alors les conduits 20.

Il est possible d'obtenir de cette manière un verrouillage total de toute injection d'air froid dans le véhicule pour une sélection de température « Chaud maximum ».

Une situation intermédiaire est représentée sur la figure 6b où le volet 33 de mixage ne peut au maximum obturer que partiellement les conduits 20. La plage P de réglage de la température se situe alors entre celles définies sur les figures 5 et 6a.

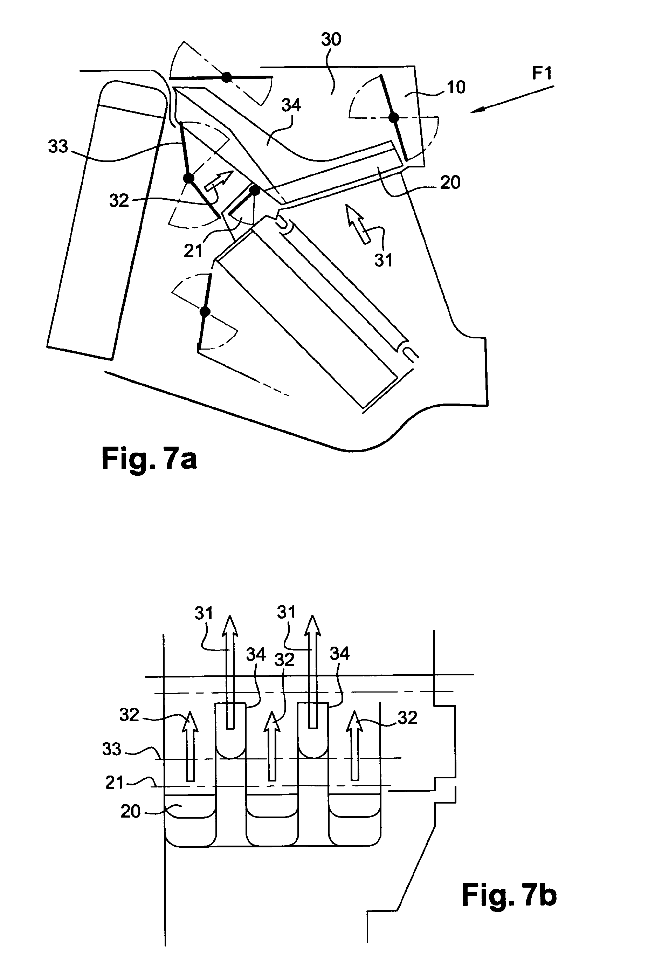

Les figures 7a et 7b illustrent une variante de réalisation montrant que le volet 33 de mixage peut prendre diverses formes, en particulier celle d'un volet papillon.

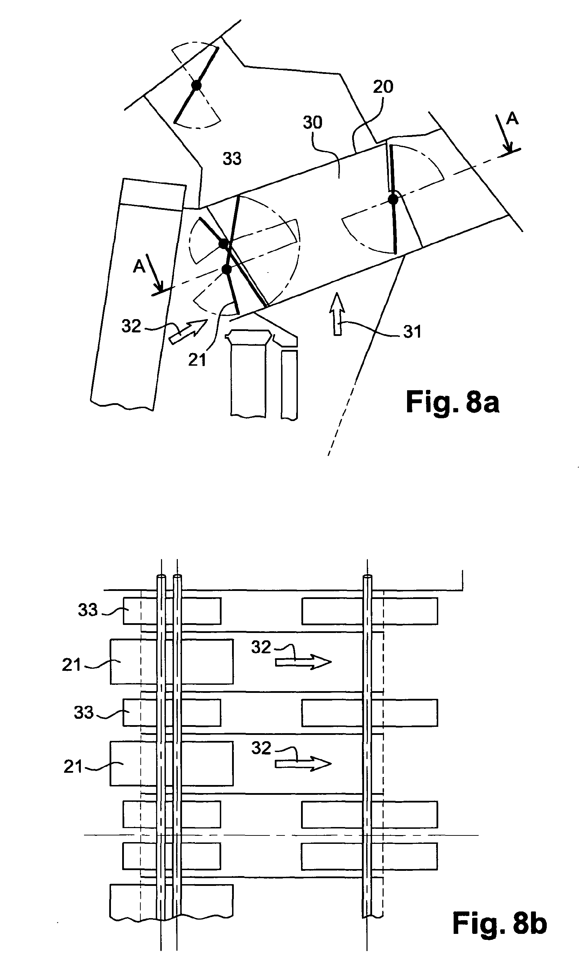

Pour des raisons d'encombrement dans le sens de l'axe z, c'est-à-dire dans la direction entre le bas de la figure et le haut de la figure 8a, il peut s'avérer difficile de superposer selon cet axe les flux principaux d'air froid d'alimentation de la chambre 30 de mixage et les conduits 20 d'air froid, comme représenté sur les figures 2 et 3. Dans ce cas, on peut adopter une autre disposition où les flux principaux et les conduits sont placés latéralement ainsi que l'illustrent les figures 8a et 8b.

Enfin, dans certains cas particuliers, l'ensemble des conduits 20 d'air froid peut être indépendant de tout ensemble additionnel de gestion aérothermique.

Cette disposition s'applique par exemple à des concepts d'appareils de chauffage et de climatisation où il n'est pas nécessaire de recourir à l'utilisation de cet ensemble pour obtenir les performances demandées dans les spécifications de l'appareil.

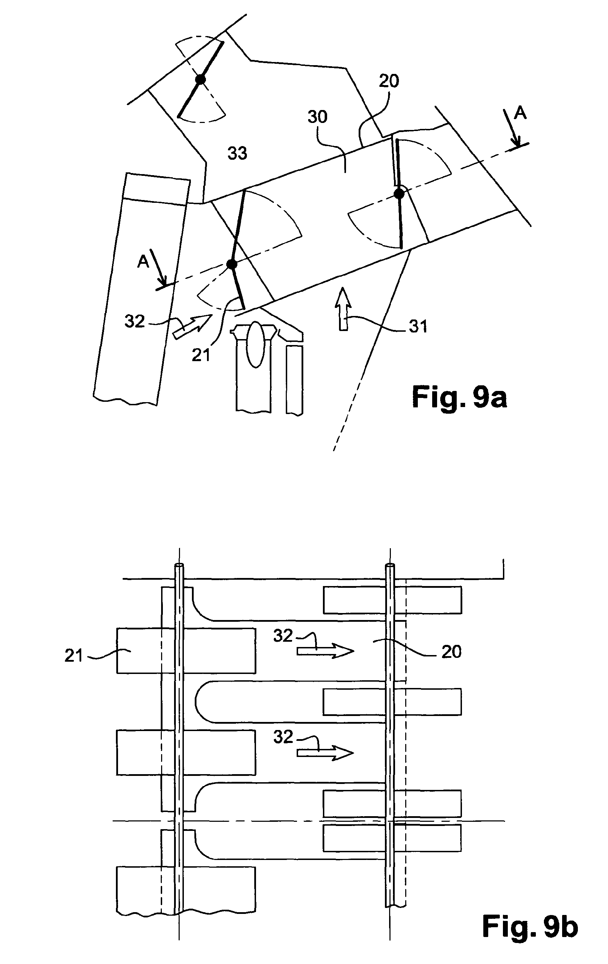

Elle peut également s'appliquer à d'autres concepts d'appareils, utilisant un principe de réglage de température autre que par mixage d'air. Cette situation est illustrée sur les figures 9a et 9b où le flux principal sortant de la bouche 10 de ventilation est un flux d'air chaud dont la température est ajustée par un robinet 41 de réglage de l'admission du liquide dans le radiateur 40 et non par alimentation en air froid et mixage dans la chambre 30 avec de l'air chaud.

## Revendications

1. Système de contrôle de température en sortie d'au moins une bouche (10, 11) de distribution d'une chambre (30) de transit d'un appareil de ventilation, chauffage et éventuellement climatisation, **caractérisé en ce que** ledit système comprend une pluralité de conduits (20, 50) d'air traversant la chambre (30) de transit jusque dans la bouche (10, 11) de distribution.

2. Système selon la revendication 1, **caractérisé en ce que** lesdits conduits d'air sont au moins en partie des conduits (20) d'air froid.

3. Système selon la revendication 1, **caractérisé en ce que** lesdits conduits d'air sont au moins en partie des conduits (50) d'air chaud.

4. Système selon l'une des revendications précédentes, **caractérisé en ce que** l'entrée des conduits (20, 50) d'air est placée directement en regard de l'entrée d'un flux (31, 32) d'alimentation en air de la chambre (30) de transit.

5. Système selon la revendication 4, **caractérisé en ce que** les conduits (20, 50) d'air et le flux (31, 32) d'alimentation en air sont superposés dans la chambre (30) de transit.

6. Système selon la revendication 4, **caractérisé en ce que** les conduits (20, 50) d'air et le flux (31, 32) d'alimentation en air sont disposés latéralement dans la chambre (30) de transit.

7. Système selon l'une des revendications précédentes, **caractérisé en ce que** la chambre (30) de transit est une chambre de mixage d'un flux d'air froid (32) et d'un flux d'air chaud (31).

8. Système selon la revendication 7, **caractérisé en ce que** la chambre (30) de mixage comporte un volet (33) de mixage, ledit volet de mixage est extérieur aux conduits (20) d'air froid.

9. Système selon la revendication 7, **caractérisé en ce que** la chambre (30) de mixage comporte un volet (33) de mixage, ledit volet de mixage est apte à obturer au moins partiellement les conduits (20) d'air froid.

10. Système selon la revendication 2, **caractérisé en ce que** les conduits (20) d'air froid sont intégrés dans un ensemble (34) de gestion aérothermique dudit appareil.

11. Système selon l'une des revendications 3 ou 10 **caractérisé en ce que** les conduits (50) d'air chaud sont intégrés dans un ensemble (34) de gestion aérothermique dudit appareil.

12. Système selon l'une quelconque des revendications 1 à 6, **caractérisé en ce que** la chambre (30) de transit est une chambre d'air dont la température est tempérée par un radiateur.

13. Système selon l'une des revendications 10 ou 11, **caractérisé en ce que** ledit ensemble de gestion aérothermique est un mélangeur (34) de flux croisés.

14. Système selon la revendication 13, **caractérisé en ce que** le mélangeur (34) de flux croisés comporte des canaux (342) de flux d'air chaud plus courts que les conduits (50) d'air chaud.

15. Système selon l'une des revendications 13 ou 14, **caractérisé en ce que** le mélangeur (34) de flux croisés comporte des canaux (34) de flux d'air froid plus courts que les conduits (50) d'air chaud.

## Claims

1. Temperature control system at the outlet of at least one distribution inlet (10, 11) of a transit chamber (30) of a ventilation, heating and if applicable air conditioning unit, **characterised in that** said system comprises a plurality of air canals (20, 50) passing through the transit chamber (30) to the distribution inlet (10, 11).

2. System according to claim 1, **characterised in that** said air canals are at least partly cold air canals (20).

3. System according to claim 1, **characterised in that** said air canals are at least partly hot air canals (50).

4. System according to any of the above claims, **characterised in** the inlet of the air canals (20, 50) is positioned directly opposite the inlet of an air supply flow (31, 32) of the transit chamber (30).

5. System according to claim 4, **characterised in that** the air canals (20, 50) and the air supply flow (31, 32) are superimposed in the transit chamber (30).

6. System according to claim 4, **characterised in that** the air canals (20, 50) and the air supply flow (31, 32) are arranged laterally in the transit chamber (30).

7. System according to any of the above claims, **characterised in that** the transit chamber (30) is a mixing chamber of a cold air flow (32) and a hot air flow (31).

8. System according to claim 7, **characterised in that** the mixing chamber (30) comprises a mixing flap (33), said mixing flap is external to the cold air canals (20).

9. System according to claim 7, **characterised in that** the mixing chamber (30) comprises a mixing flap (33), said mixing flap is suitable for sealing the cold air canals (20) at least partially.

10. System according to claim 2, **characterised in that** the cold air canals (20) are integrated in an aerothermal control assembly of said unit.

11. System according to any of claims 3 or 10 **characterised in that** the hot air canals (50) are integrated in an aerothermal control assembly of said unit.

12. System according to any of claims 1 to 6, **characterised in that** the transit chamber (30) is an air chamber wherein the temperature is tempered by a heater.

13. System according to any of claims 10 or 11, **characterised in that** said aerothermal control assembly is an intersected flow mixer (34).

14. System according to claim 13, **characterised in that** the intersected flow mixer (34) comprises shorter hot air flow canals (342) than the hot air canals (50).

15. System according to any of claims 13 or 14, **characterised in that** the intersected flow mixer (34) comprises shorter cold air flow canals (34) than the hot air canals (50).

## Patentansprüche

1. System zur Temperaturkontrolle am Austritt von zumindest einer Verteilungsöffnung (10, 11) einer Durchgangskammer (30) eines Belüftungs-, Heizungs- und eventuell Klimatisierungsgeräts, **dadurch gekennzeichnet, dass** das besagte System mehrere Luftleitungen (20, 50) umfasst, welche die Durchgangskammer (30) bis in die Verteilungsöffnung (10, 11) queren.

2. System nach Anspruch 1, **dadurch gekennzeichnet, dass** die besagten Luftleitungen zumindest teilweise Kaltluftleitungen (20) sind.

3. System nach Anspruch 1, **dadurch gekennzeichnet, dass** die besagten Luftleitungen zumindest teilweise Warmluftleitungen (50) sind.

4. System nach einem der vorhergehenden Ansprüche, **dadurch gekennzeichnet, dass** der Eintritt der Luftleitungen (20, 50) direkt gegenüber dem Eintritt eines Luftversorgungsflusses (31, 32) der Durchgangskammer (30) angeordnet ist.

5. System nach Anspruch 4, **dadurch gekennzeichnet, dass** die Luftleitungen (20, 50) und die Luftversorgungsflüsse (31, 32) in der Durchgangskammer (30) übereinander gelagert sind.

6. System nach Anspruch 4, **dadurch gekennzeichnet, dass** die Luftleitungen (20, 50) und die Luftversorgungsflüsse (31, 32) in der Durchgangskammer (30) seitlich gelagert sind.

7. System nach einem der vorhergehenden Ansprüche, **dadurch gekennzeichnet, dass** die Durchgangskammer (30) eine Mischkammer von einem Kaltluftfluss (32) und einem Warmluftfluss (31) ist.

8. System nach Anspruch 7, **dadurch gekennzeichnet, dass** die Mischkammer (30) eine Mischklappe (33) umfasst, wobei sich die besagte Mischklappe außerhalb der Kaltluftleitungen (20) befindet.

9. System nach Anspruch 7, **dadurch gekennzeichnet, dass** die Mischkammer (30) eine Mischklappe (33) umfasst, wobei die besagte Mischklappe imstande ist, die Kaltluftleitungen (20) zumindest teilweise zu verschließen.

10. System nach Anspruch 2, **dadurch gekennzeichnet, dass** die Kaltluftleitungen (20) in eine aerothermische Steuerungseinheit (34) des besagten Geräts integriert sind.

11. System nach einem der Ansprüche 3 oder 10, **dadurch gekennzeichnet, dass** die Warmluftleitungen (50) in eine aerothermische Steuerungseinheit (34) des besagten Geräts integriert sind.

12. System nach einem der Ansprüche 1 bis 6, **dadurch gekennzeichnet, dass** die Durchgangskammer (30) eine Luftkammer ist, deren Temperatur von einen Kühler temperiert wird.

13. System nach einem der Ansprüche 10 oder 11, **dadurch gekennzeichnet, dass** die besagte aerothermische Steuerungseinheit ein Kreuzflussmischer (34) ist.

14. System nach Anspruch 13, **dadurch gekennzeichnet, dass** der Kreuzflussmischer (34) Warmluftflusskanäle (342) umfasst, die kürzer sind als die Warmluftleitungen (50).

15. System nach einem der Ansprüche 13 oder 14, **dadurch gekennzeichnet, dass** der Kreuzflussmischer (34) Kaltluftflusskanäle (341) umfasst, die kürzer sind als die Warmluftleitungen (50).
